**Europäisches Patentamt**

**European Patent Office**

**Office européen des brevets**

(19)

(11) Numéro de publication: **0 071 247**
**B1**

(12)

# FASCICULE DE BREVET EUROPEEN

(45) Date de publication du fascicule du brevet:
**27.03.85**

(51) Int. Cl.⁴: **A 47 J 43/044**

(21) Numéro de dépôt: **82106787.3**

(22) Date de dépôt: **27.07.82**

(54) Appareil de préparation de mayonnaise ou sauce analogue.

(30) Priorité: **28.07.81 FR 8114599**

(43) Date de publication de la demande:
**09.02.83 Bulletin 83/6**

(45) Mention de la délivrance du brevet:
**27.03.85 Bulletin 85/13**

(84) Etats contractants désignés:
**AT BE CH DE GB IT LI NL SE**

(56) Documents cités:
**DE - C - 647 673**
**FR - A - 1 092 758**
**FR - A - 1 226 586**
**FR - A - 1 226 587**
**FR - A - 1 284 023**
**US - A - 2 266 186**
**US - A - 2 650 741**

(73) Titulaire: **MOULINEX S.A., 7 à 15, rue Jules-Ferry,
F-93171 Bagnolet (FR)**

(72) Inventeur: **Vielle, Dominique André, La Résidence
Normande 18, route de Mamers, F-61000 Alencon (FR)**

(74) Mandataire: **May, Hans Ulrich, Thierschstrasse 27,
D-8000 München 22 (DE)**

## Description

L'invention se rapporte à un appareil de préparation de mayonnaise ou sauce analogue, comprenant un bol de travail comportant sur son bord un siège adapté à recevoir de manière amovible un batteur électrique équipé d'un organe de battage, tel qu'une paire de fouets, en une position telle que cet organe de battage soit situé dans le bol au voisinage du fond de ce bol, et un réservoir distributeur d'huile placé au-dessus du bol et adapté à laisser l'huile s'écouler lentement dans le bol au moyen d'un robinet.

Le brevet FR-A-1 092 758 décrit un appareil de ce genre, dans lequel le batteur électrique présente une forme et des dimensions rigoureusement adaptées au bol de travail, et dans lequel le réservoir distributeur est incorporé à ce batteur. Pour ces raisons il est impossible, ou du moins malaisé, d'utiliser ce batteur avec un autre bol ou récipient de travail, par exemple directement dans une cassarole ou un récipient de cuisson.

L'invention a pour but de constituer un appareil de préparation de mayonnaise ou sauce analogue en utilisant, comme batteur électrique, un batteur portable à la main de type usuel, c'est-à-dire destiné à être employé pour de nombreuses autres préparations culinaires dans toutes sortes de récipients.

Un appareil selon l'invention est caractérisé en ce que, le réservoir distributeur constituant une pièce séparée du batteur électrique, et étant monté amovible sur une région du bord supérieur du bol dont la région opposée constitue le siège de réception du batteur, le batteur repose par son extrémité postérieure sur ledit siège tandis que son extrémité antérieure, située au-delà des fouets, repose sur une console solidaire du réservoir, le réservoir ayan la forme d'un fer à cheval dont les ailes s'étendent au-dessus du débouché du bol, de part et d'autre du batteur.

Ainsi le batteur peut, soit être utilisé indépendamment du réservoir et du bol pour diverses préparationsculinaires, soit être posé sur le bol et le réservoir en vue de la confection de mayonnaise. En ce cas, le réservoir constitue, en quelque sorte, une pièce appropriée d'adaptation au bol, coopérant au maintien du batteur au-dessus du bol, et assurant en outre par ses ailes une protection contre les éclaboussures vers l'extérieur du bol.

Les caractéristiques et avantages de l'invention ressortiront d'ailleurs de la description qui va suivre, à titre d'exemple, en référence aux dessins annexés dans lesquels:

la figure 1 représente en élévation l'ensemble d'un appareil selon l'invention et d'un batteur électrique à main;

la figure 2 est une vue de cet appareil en coupe verticale, avec le batteur en élévation;

la figure 3 est une coupe verticale du réservoir distributeur d'huile faisant partie de l'appareil, après enlèvement du robinet;

la figure 4 est une vue de dessus du bol de travail surmonté de ce réservoir, encore sans le robinet;

la figure 5 est une coupe verticale du bol de travail selon la ligne V-V de la figure 2;

la figure 6 est une coupe horizontale du fond du bol de travail selon la ligne VI-VI des figures 2 et 5;

la figure 7 représente, à plus grande échelle, le robinet équipant le réservoir distributeur d'huile.

L'appareil représenté comprend un bol de travail 10 surmonté d'un réservoir distributeur d'huile 12 adapté à laisser l'huile s'écouler lentement dans le bol 10 au moyen d'un robinet 14. Le bol 10 comporte en outre un siège 16 adapté à recevoir de manière amovible un batteur électrique à main de type usuel 18 équipé d'une paire de fouets 20 en une position telle que lesdits fouets soient situés dans le bol 10 au voisinage du fond de ce bol.

Le siège 16 du batteur est constitué par une région 22 du bord supérieur du bol 10, laquelle région est à cet effet convenablement conformée en creux. Cette région forme en même temps la face supérieure d'une poignée 24 solidaire du bol.

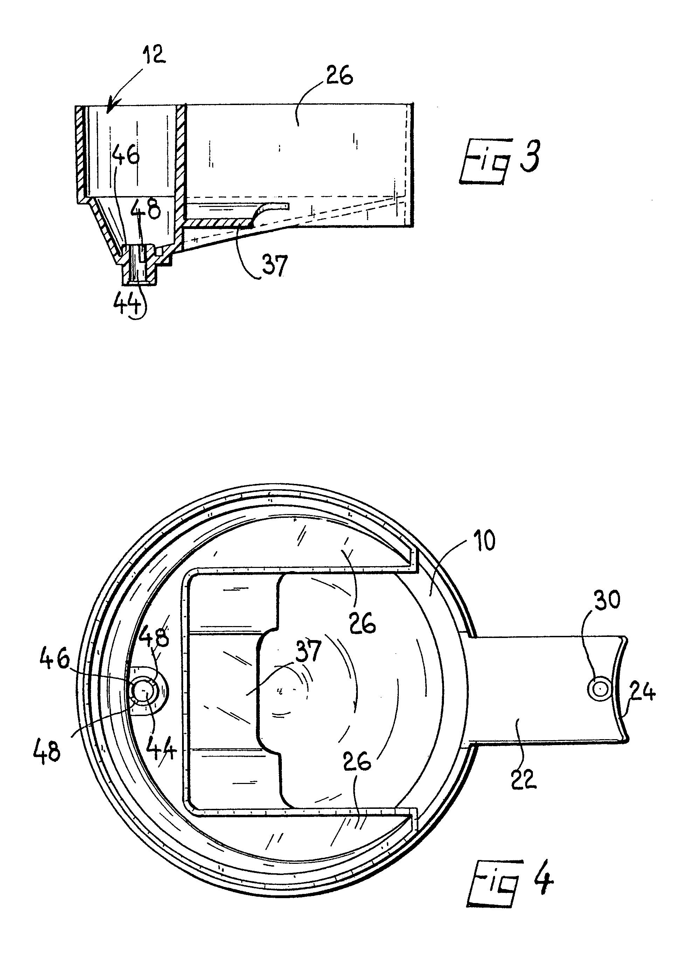

Le réservoir distributeur 12 est monté amovible sur le bord supérieur du bol. Il repose sur une zone de ce bord diamétralement opposée à la region 22 formant le siège du batteur. Il a la forme générale d'un fer à cheval (fig. 4) dont les ailes 26 s'étendent au-dessus du débouché du bol, de part et d'autre du batteur 18.

Le batteur 18 repose par son extrémité postérieure 28 sur la région 22, laquelle porte d'ailleurs un bossage 30 de mise en place qui s'engage dans une cavité 32 pratiquée dans le corps du batteur; cette cavité 32 n'est autre que la cavité de logement d'une vis 33 d' assemblage des deux coquilles 34 et 35 constituant le corps du batteur. Par son extrémité antérieure 36, située au-delà des fouets 20, le batteur 18 repose sur une console 37 solidaire du réservoir 12 et s'étendant entre les ailes 26.

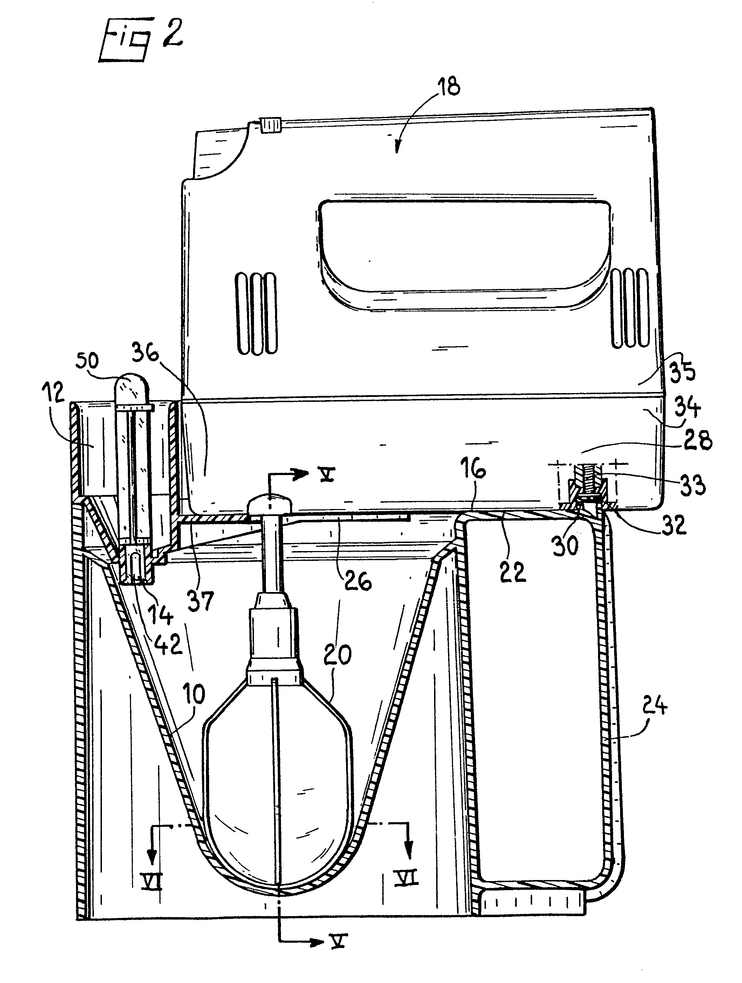

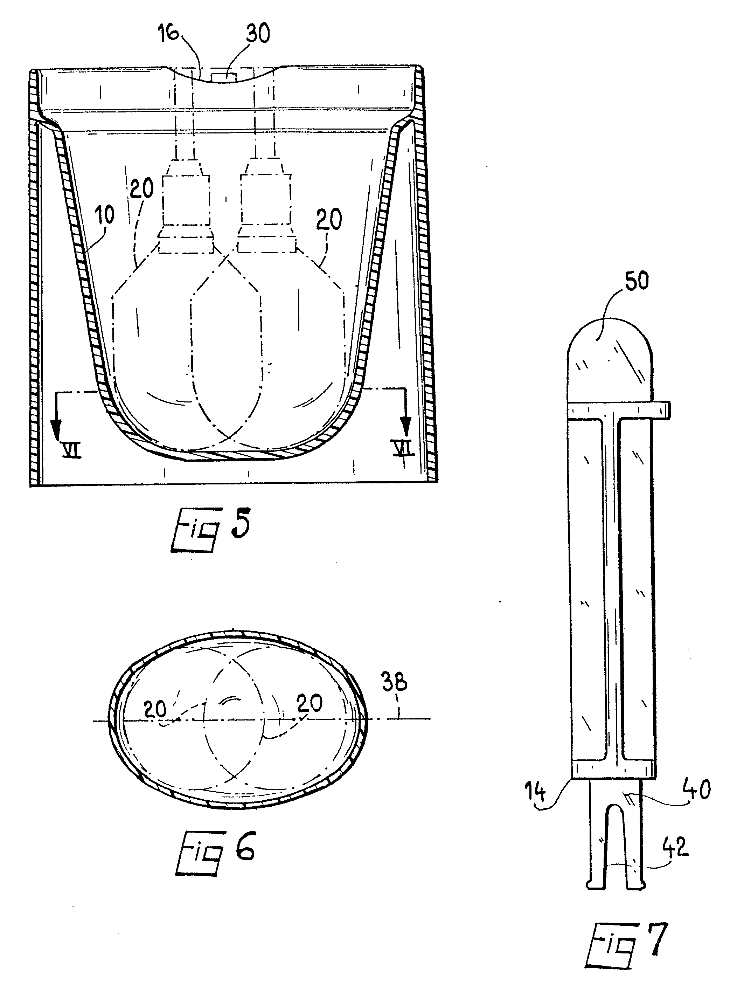

Comme on le voit bien sur les figures 2 et 5, le fond du bol 10 présente la forme d'une surface enveloppant étroitement la partie inférieure de la paire de fouets 20. Cette surface présente à cet effet, en section horizontale (fig. 6), la forme générale d'une ellipse circonscrite à la paire de fouets 20 et ayant son grand axe situé dans le plan vertical 38 contenant les axes des fouets 20, tandis qu'en section verticale selon ledit plan 38, ainsi qu'en section verticale selon un plan perpendiculaire audit plan 38, cette surface présente une forme en U englobant la partie inférieure de la paire de fouets (voir fig. 5 et 2 respectivement).

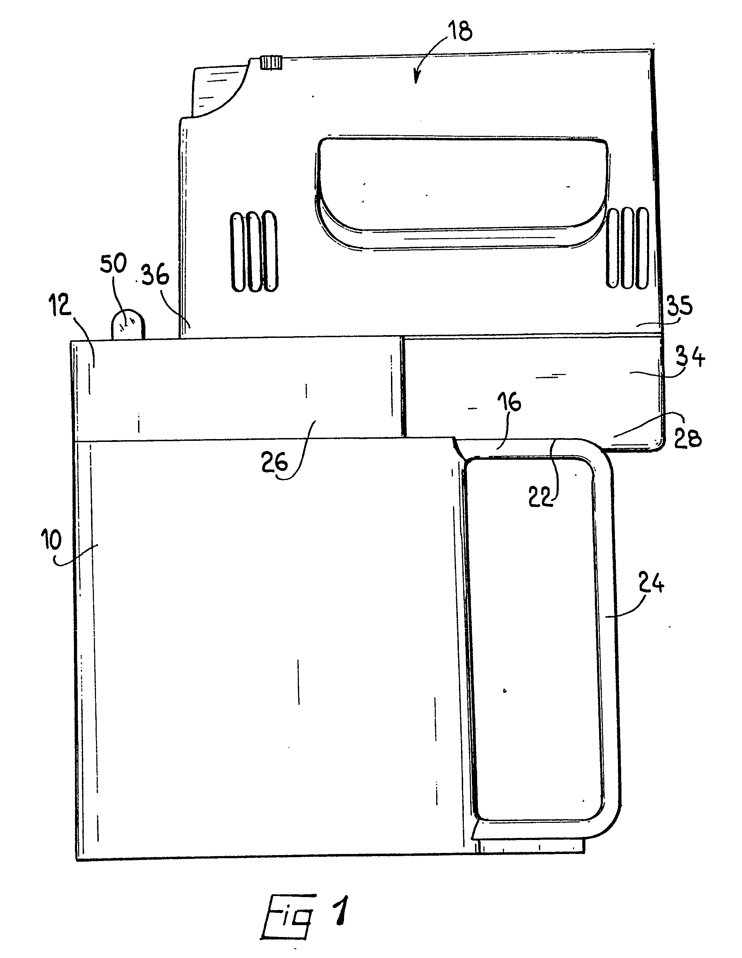

Le robinet 14 est constitué par une tige verticale, dont la partie inférieure 40 présente une fente diamétrale 42 et est montée rotative autour d'un axe vertical dans un orifice 44 qui est pratiqué dans le fond du réservoir 12 et qui est entouré d'une collerette ascendante 46 (fig. 3) formant palier de rotation, où sont pratiquées deux fentes 48 diamétralement opposées. L'extrémité supérieure de la tige 14 porte une languette verticale 50 qui constitue manette de commande du robinet et qui à cet effet fait saillie au-dessus du niveau du bord supérieur du réservoir 12, comme on le voit bien sur les figures 1 et 2. On comprend ainsi que la position d'ouverture complète du robinet 14 correspond à la coïnncidence exacte de la fente 42 du robinet avec les fentes 48 de la collerette 46, tandis qu'une position d'ouverture goutte à goutte correspond à une coïncidence seulement partielle de la fente 42 et des fentes 48, et que la position de fermeture complète est obtenue en plaçant la fente 42 en face des parties pleines de la collerette 46.

Pour préparer de la mayonnaise au moyen d'un tel appareil, l'utilisateur place le jaune d'oeuf dans le bol 10, pose sur le bol le réservoir 12 chargé d'huile, puis sur le siège 16 le batteur 18 dont la partie postérieure vient s'emboîter sur le bossage 30 et dont la partie antérieure vient reposer sur la console 37, tandis que les fouets 20 viennent se placer d'eux-mêmes en position convenable au fond du bol comme représenté aux figures 2 et 5.

L'utilisateur met ensuite le batteur en marche, puis laisse s'écouler l'huile lentement en agissant sur la manette 50 du robinet 14. La mayonnaise se forme ainsi au fur et à mesure de l'introduction de l'huile dans le bol. Pendant cette opération, les ailes 26 du réservoir constituent des écrans de protection contre les les éclaboussures vers l'extérieur du bol.

Après confection de la mayonnaise, le bol 10, débarassé du réservoir 12 et du batteur, peut être utilisé comme une saucière de service; la poignée 24 facilite cette utilisation.

## Revendications

1. Appareil de préparation de mayonnaise ou sauce analogue, comprenant un bol de travail (10) comportant sur son bord un siège (16) adapté à recevoir de manière amovible un batteur électrique (18) équipé d'un organe de battage, tel qu'une paire de fouets (20), en une position telle que cet organe de battage (20) soit situé dans le bol (10) au voisinage du fond de ce bol, et un réservoir distributeur d'huile (12) placé au-dessus du bol (10) et adapté à laisser l'huile s'écouler lentement dans le bol (10) au moyen d'un robinet (14), caractérisé en ce que, le réservoir distributeur (12) constituant une pièce séparée du batteur (18), et étant monté amovible sur une région du bord supérieur du bol (10) dont la région opposée (22) constitue le siège (16) de réception du batteur, le batteur (18) repose par son extrémité postérieure (28) sur le siège (16) tandis que son extrémité antérieure (36), située au-delà des fouets (20), repose sur une console (37) solidaire du réservoir (12), le réservoir (12) ayant la forme d'un fer à cheval dont les ailes (26) s'étendent au-dessus du débouché du bol (10), de part et d'autre du batteur (18).

2. Appareil selon la revendication 1, caractérisé en ce que la région (22) du bord formant siège est constituée par la face supérieure d'une poignée (24) solidaire du bol (10).

3. Appareil selon la revendication 1 ou la revendication 2, caractérisé en ce que le fond du bol (10) présente la forme d'une surface enveloppant étroitement la partie inférieure de la paire de fouets (20), cette surface présentant à cet effet, en section horizontale, la forme générale d'une ellipse circonscrite à la paire de fouets et ayant son grand axe situé dans le plan vertical (38) contenant les axes des fouets, tandis qu'en section verticale selon ledit plan (38) des axes ainsi qu'en section verticale selon un plan perpendiculaire audit plan (38) des axes, cette surface présente une forme en U englobant la partie inférieure de la paire de fouets (20).

## Patentansprüche

1. Gerät zum Zubereiten von Mayonnaise oder ähnlicher Sauce, das eine Arbeitsschüssel (10) aufweist, die an ihrem Rand einen Sitz (16) aufweist, der zur abnehmbaren Aufnahme eines elektrischen Rührgeräts (18) dient, das mit einem Rührelement, wie einem Paar von Rührbesen (20) in einer solchen Stellung ausgerüstet ist, daß dieses Rührelement (20) in der Nähe des Bodens der Schüssel angeordnet ist, und das einen Ölzulaufbehälter (12) aufweist, der oberhalb der Schüssel (10) angeordnet ist und dafür eingerichtet ist, daß er mittels eines Hahnes (14) das Öl langsam in die Schüssel (10) fließen läßt, dadurch gekennzeichnet, daß der Zulaufbehälter (12) ein vom Rührgerät (18) getrenntes Teil bildet und abnehmbar auf einem Bereich der Oberkante der Schüssel (10) gehalten ist, dessen gegenüber liegender Bereich (22) den Sitz (16) zur Aufnahme des Rührgeräts bildet, wobei das Rührgerät (18) mit seinem hinteren Ende (28) auf dem Sitz (16) ruht, während sein jenseits der Rührbesen (20) gelegenes Vorderende (36) auf einer Konsole (37) ruht, die fest mit dem Zulaufbehälter (12) verbunden ist, wobei der Zulaufbehälter (12) die Form eines Hufeisens hat, dessen Flügel (26) sich oberhalb der Öffnung der Schüssel (10) beiderseits des Rührgeräts (18) erstrecken.

2. Gerät nach Anspruch 1, dadurch gekennzeichnet, daß der einen Sitz bildende Bereich (22) der Kante von der Oberseite eines mit der Schüssel (10) fest verbundenen Handgriffs (24) gebildet ist.

3. Gerät nach Anspruch 1 oder Anspruch 2, dadurch gekennzeichnet, daß der Boden der Schüssel (10) die Form einer Fläche hat, die den unteren Teil des Paars von Rührbesen (20) eng umgibt und zu diesem Zweck einen waagerechten Querschnitt von der allgemeinen Form einer das Paar der Rührbesen umschreibenden Ellipse hat, deren große Achse in der die Achsen der Rührbesen enthaltenden senkrechten Ebene (38) liegt, während sie im senkrechten Schnitt gemäß der Ebene (38) der Achsen sowie im senkrechten Schnitt längs einer zur Ebene (38) der Achsen senkrechten Ebene eine U-Form aufweist, die den unteren Teil des Paars der Rührbesen (20) umfaßt.

## Claims

1. An appliance for making mayonnaise or a similar sauce, comprising a bowl (10) formed with a peripheral seat (16) for removably receiving an electric stirring device (18) which is equipped with a stirring unit such as a pair of whisks (20) in such a position that said stirring unit (20) is disposed near the bottom of the bowl and which includes an oil feeding container (12) disposed above the bowl (10) and adapted to let the oil flow slowly into the bowl (10) by means of a cock (14), characterized in that the feeding container (12) constitutes a part which is separate from the stirring device (18) and is removably held on a region of the top edge of the bowl (10) whose oppositely located region (22) forms the seat (16) for receiving the stirring device, wherein the stirring device (18) with its rear end (28) rests on the seat (16) while its front end (36), which is on the other side of the whisks (20), rests on a bracket (37) fixedly joined to the feeding container (12), the feeding container (12) being shaped like a horseshoe whose legs (26) extend above the opening of the bowl (10) on either side of the stirring device (18).

2. An appliance as claimed in claim 1, characterized in that the seat forming-region (22) of the periphery is constituted by the top surface of a handle (24), which is permanently joined to the bowl (10).

3. An appliance as claimed in claim 1 or claim 2, characterized in that the bottom of the bowl (10) has the shape of a surface which closely surrounds the lower portion of the pair of whisks (20) and to this end is of horizontal cross-section having the general shape of an ellipse circumscribing the pair of whisks, the major axis of the ellipse being located in the vertical plane (38) containing the axes of the whisks, whereas in vertical section according to the plane (38) of the axes and also in vertical section along a plane normal to the plane (38) of the aces it has U-shape for encompassing the lower portion of the pair of whisks (20).

Fig 1

Fig 2

Fig 3

Fig 4

Fig 5

Fig 6

Fig 7